Europäisches Patentamt

(19) European Patent Office

Office européen des brevets

(11) Publication number: **0 097 606**
**B1**

(12) **EUROPEAN PATENT SPECIFICATION**

(45) Date of publication of patent specification: **21.01.87**

(21) Application number: **83630095.4**

(22) Date of filing: **02.06.83**

(51) Int. Cl.⁴: **H 02 P 7/62,** H 02 P 7/00,
H 02 K 5/167

(54) Method of securing sleeve bearing lubrication of a multiple speed rotational device, control arrangement for carrying out said method, and use of said method and control arrangement in regulating a fan.

(30) Priority: **21.06.82 US 390013**
**21.06.82 US 390016**

(43) Date of publication of application:
**04.01.84 Bulletin 84/01**

(45) Publication of the grant of the patent:
**21.01.87 Bulletin 87/04**

(84) Designated Contracting States:
**DE FR GB IT**

(56) References cited:
**DE-A-2 336 752**
**DE-A-2 537 758**
**US-A-3 584 980**

(73) Proprietor: **CARRIER CORPORATION**
**Carrier Tower 6304 Carrier Parkway P.O. Box 4800**
**Syracuse New York 13221 (US)**

(72) Inventor: **Wood, Russell E.**
**8143 George Taylor Road**
**Fayetteville New York 13066 (US)**
Inventor: **Hargis, Larry N.**
**338 Chestnut Street**
**North Syracuse New York 13212 (US)**

(74) Representative: **Waxweiler, Jean et al**
**OFFICE DENNEMEYER S.à.r.l. 21-25 Allée Scheffer P.O.Box 41**
**L-2010 Luxembourg (LU)**

Courier Press, Leamington Spa, England.

## Description

The present invention relates to a method of securing sleeve bearing lubrication in a machine having a plurality of operating speeds and at least one lubricated sleeve bearing securing a rotating shaft, as well as a control arrangement for an electric motor having a lubricated bearing supporting the rotor shaft, said motor having a plurality of operating speeds.

Further, the invention relates to an apparatus for regulating the volume of air circulated by a fan including said control arrangement and a method of regulating the volume of air circulated by a fan by operating a fan motor connected to power the fan at varying speeds by supplying power to the motor at selected voltage levels, while securing the sleeve bearing lubrication by a method mentioned hereinbefore.

In an air conditioning system it is desirable to have the capability of operating the air conditioning system to cool an enclosure notwithstanding the outdoor ambient temperature is relatively low. In a typical refrigeration circuit the condensing temperature and pressure and consequently the evaporator temperature are a function of the ambient air temperature. In order to allow air conditioning systems to operate effectively in low outdoor conditions it is necessary that the condensing temperature, the temperature at which refrigerant changes state from a gas to a liquid within the condenser, be maintained at a minimum temperature level. On hot days condenser fans are utilized to circulate ambient air in heat exchange relation with refrigerant in the condenser to effect a transfer of heat energy from the refrigerant to the air such that the refrigerant changes state from a gas to a liquid. When the ambient air temperature is reduced, a smaller volume of air or none at all needs to be forcibly circulated over the condenser surface to provide for appropriate heat transfer. If the condenser fans are operated at full speed and the ambient temperature is sufficiently low then the refrigerant is condensed at a lower temperature and thereafter subcooled to an even lower temperature such that freezeup may occur on the evaporator heat transfer surfaces. Overall system capacity may also be reduced since the condensing pressure is reduced and as a result thereof the mass flow rate of refrigerant through the system is also reduced.

To maintain the air conditioning system at full capacity with low outdoor ambient temperature conditions it is desirably to vary the speed of the condensing fan motors to vary the air flow in heat transfer relationship with the condenser. The fan speeds are varied to maintain the condensing temperature at a desired level. Typically, a refrigerant temperature is sensed someplace in the closed refrigeration circuit to determine at what flow rate to circulate air, if any, over the condensing surface.

Speed control devices have been utilized to vary the speed of the electric motor connected to drive a propeller type fan for circulating the ambient air over the condenser. It has been found that an economical and efficient system for accomplishing such a fan speed variance is to utilize a tapped transformer for supplying power at various voltages to the motor. This tapped transformer allows the use of a standard motor to achieve the various operating speeds.

Another system for utilizing a conventional economical fan motor is to utilize a motor having a sleeve bearing as opposed to a more expensive ball bearing. The sleeve bearing motor has a rotating shaft which is secured within a cylindrical sleeve. Lubricant is supplied to the space between the sleeve and the shaft for supporting the shaft on a lubricant film between the bearing and shaft.

It has been found that if the fan motor is operated at a sufficiently slow speed, the lubricant film is not established between the shaft and the bearing. If no lubricant film is established the bearing life is greatly reduced. It has further been found that if, upon startup, the shaft is operated at a minimum rotational velocity to establish a lubricant film then subsequent slower speed operation does not destroy the lubricant film. Hence, operation of the fan motor at the reduced speed after the film has been established maintains the film and acts to prolong the bearing life.

As described herein, there will be disclosed a control system which, upon startup, acts to energize the fan motor at a minimum speed which may vary from 500 to 800 revolutions per minute for a predetermined time interval to establish a lubricant film. Thereafter, depending upon the need for ambient air to be circulated over the condenser, the fan speed may be lowered while the lubricant film is maintained.

In a conventional vapor compression refrigeration circuit employing an air cooled condenser, the condenser is normally located in the ambient and is subject to the changes in atmospheric weather conditions.

When outdoor temperatures are relatively high, as for example during the summer, the temperature and pressure of the refrigerant flowing from the condenser to the system expansion device is relatively high. However, when the outdoor temperature is relatively low, for example during the winter, the temperature and correspondingly the pressure of the refrigerant flowing from the condenser to the system expansion device is reduced. Reduction in pressure of the refrigerant between the condenser and expansion device reduces the amount of refrigerant fed to the system evaporator by the expansion means with a corresponding reduction in system capacity.

By reducing the amount of refrigerant flowing to the evaporator low evaporator temperatures may result further exacerbating system capacity reduction by creating ice formation on the evaporator which impedes heat transfer between refrigerant flowing through the evaporator and air flowing thereover.

In order to effectively regulate the condensing temperature and pressure the volume of air being circulated over the condenser to effect heat transfer between the refrigerant and the air may be varied. As the outdoor temperature drops the flow of air necessary to absorb a given amount of heat energy also drops. Hence, by matching the flow of air over the condenser with the temperature of said air the temperature and pressure of the condenser may be maintained.

It has been found in condenser fan operations wherein a motor is utilized to drive a propeller fan for circulating air over the condenser that numerous methods of speed control are available. One economical method for regulating fan speed is to utilize a tapped transformer with a standard fan motor. The utilization of a tapped transformer provides a power source having various voltage levels and the utilization of a standard fan motor allows for the fan motor to be operated at various speeds depending upon the voltage of the power source. By utilizing the standard fan motor the cost of the motor is reduced as compared to a dual wound fan motor or other speed control devices such as wave chopping apparatus, inverters or multiple winding motors.

One of the problems identified with utilizing tapped transformers to supply power of different voltages to the fan motor is that a standard fan motor, when operated at certain selected voltages, tends to create an overheating situation. A specific region known as a high temperature voltage region has been identified such that should a fan motor be operated having an applied voltage within that region, over-heating of the motor windings may occur. This over-heating results in reduction of fan motor life, early failure and additional maintenance problems.

The present invention is intended generally to provide for the prolongation of life of motors, and their safe, economical and reliable operation.

The object of the present invention is to provide a control arrangement and a method for establishing a lubricant film in a sleeve bearing rotating shaft device, i.e. a fan motor when the shaft is to be rotated at a reduced speed.

A sub-object of the present invention is to provide for a fan speed control utilizing a standard fan motor and a tapped transformer to operate the fan motor at selected speeds while avoiding regions of excess motor winding temperatures.

The object is achieved according to the invention by the provision of a method as claimed in claim 1 and a control arrangement as claimed in claim 4.

Advantageous embodiments of the method and control arrangement are claimed in claims 2 and 3, and 5 to 8, respectively.

The sub-object of the invention is achieved by an apparatus as claimed in claim 8 and a method as claimed in claim 12, advantageous embodiments of said apparatus and method being claimed in claims 10 and 11, and 13 and 14, respectively.

The invention will now be described by way of example with reference to the accompanying drawings, wherein:

Figure 1 is a sectional view of a sleeve bearing type fan motor and fan;

Figure 2 is a wiring schematic of a control system for controlling operation of the fan motor; and

Figure 3 is a graph of motor speed and motor winding temperature versus the voltage of the power source to the motor.

The preferred embodiment as described herein will refer to a condensing fan motor for use with a refrigeration circuit, circulating ambient air over a condensor of said refrigeration circuit. It is to be understood that the control arrangement and the method of operation wherein a lubricant film is established prior to operating at reduced speed or wherein ambient air is circulated over a condenser of the refrigeration circuit may be utilized in other applications and with devices other than electric motors, or other applications, respectively. The purpose of such a fan control in a refrigeration circuit is to allow the refrigeration system to operate at low outdoor ambient temperatures by maintaining a relatively constant head pressure in the condenser. Other motor speed control purposes could be equally satisfied by the described embodiment.

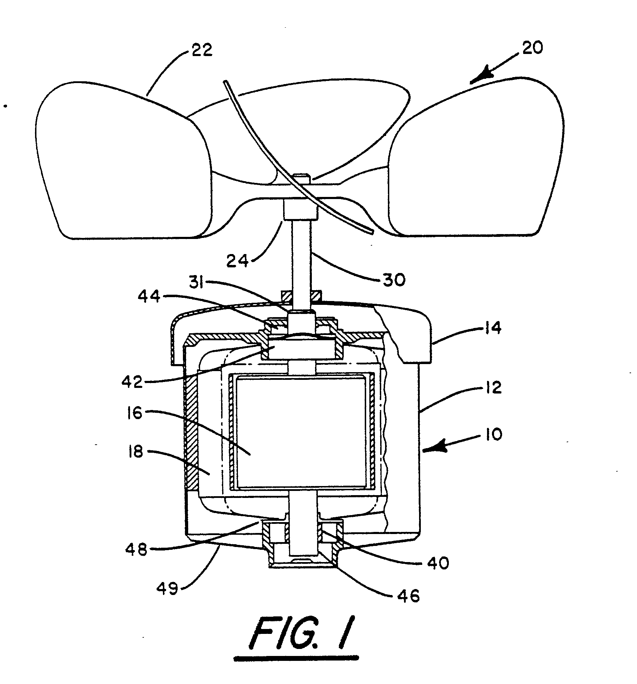

Referring now to Figure 1 there can be seen a schematic of a vertically mounted fan motor 10. This motor includes a rotor 16, stator 18 and casing 12. Fan 20 has hub 24 and fan blades 22 mounted to shaft 30 of the motor. Rain shield 14 is provided for protecting the motor from vertically falling rain. Stepped shaft 31, preload spring, grease reservoir 44 and sleeve bearing 42 are all shown mounted at the upper part of the motor. At the lower part of the motor shown in a partially cutaway section may be seen grease reservoir 46, sleeve bearing 40, the end bell of the motor 49 and lower bearing water slinger 48. It can be seen therein that bearing 40 has shaft 30 of the motor extending therethrough. Lubricant is maintained in the reservoir 46. It is this lubricant that flows in the space between the shaft and the bearing to establish the lubricant film. This bearing may have openings through it such that the lubricant may flow through the openings into the space between the rotating shaft and the bearing. The bearing may also have a diagonal groove or similar indentation for promoting oil flow within the bearing. Additionally, the reservoir may be filled with a wick type material or other material for securing the lubricant therein.

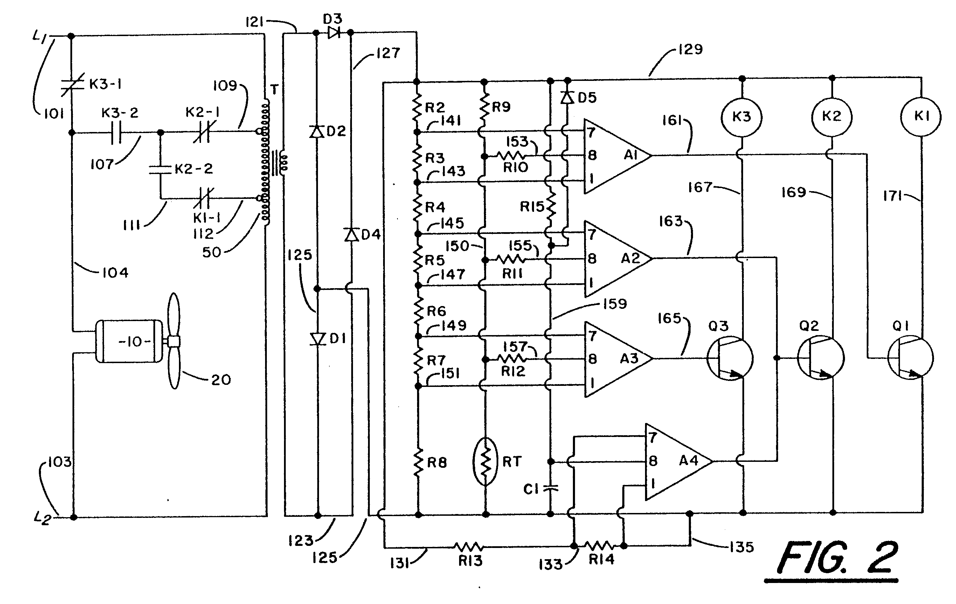

Figure 2 discloses a wiring schematic for a control system for operating a motor at various speeds. It can be seen that power is supplied through lines L-1 and L-2. Wire 103 is connected to L-2 and fan motor 10 as well as transformer 50. Line L-1 is connected by wire 101 to normally closed relay contacts K3-1 and to transformer 50. Wire 104 connects normally closed relay contacts K3-1 with normally open relay contacts K3-2 and fan motor 10. Fan motor 10 is physically connected to fan 20. Wire 107 connects normally open relay contacts K3-2 with normally open relay contacts K2-2 and normally closed relay contacts K2-1. Wire 109 connects normally closed relay contacts K2-1 with a tap connection to transformer 50. Wire 111 connects normally open relay contacts K2-2 and normally closed relay contacts K1-1. Wire 112 connects normally closed relay contacts K1-1 with a tap connection to transformer 50.

The low voltage side of the transformer 50 is connected to the control circuit portion of the wiring schematic shown in Figure 2 as opposed to the power portion already described. Wire 121 is connected from transformer 50 to diodes D-3 and D-2. Wire 123 is connected from transformer 50 to diodes D-1 and D-4. Wire 125 connects diodes D-1 and D-2, resistor R-8, thermistor RT, capacitor C-1 and switching transistor Q-1, Q-2 and Q-3. Wire 127 connects diodes D-4 and D-3 to wire 129. The four diodes, D-1 through D-4, compose a diode bridge for supplying direct current to the remainder of the control circuit.

Resistor R-2 is connected to resistor R-3 which is connected to resistor R-4 and so on in series through resistor R-8. Resistor R-2 is also connected via wire 131 to resistor R-13 and via wire 129 to resistor R-9, resistor R-15, to diode D-5 and to relays K-1, K-2 and K-3. Resistor R-2 is connected via wire 141 to resistor R-3 and to terminal seven of integrated circuit A-1. Resistor R-3 is connected via wire 143 to resistor R-4 and to terminal one of integrated circuit A-1 Resistor R-4 is connected via wire 145 to resistor R-5 and to terminal seven of integrated circuit A-2. Resistor R-5 is connected via wire 147 to resistor R-6 and to terminal one of integrated circuit A-2. Resistor R-6 is connected via wire 149 to resistor R-7 and to terminal seven of integrated circuit A-3. Resistor R-7 is connected to resistor R-8 via wire 151 and to terminal one of integrated circuit A-3.

Resistors R-9 is connected via wire 150 to resistor R-10, R-11 and R-12 which are connected respectively by wires 153, 155 and 157 to terminal eight of integrated circuits A-1, A-2 and A-3 respectively. Wire 150 also connects resistor R-9 to thermistor RT. Resistor R-15 is connected to wire 129 and connected by wire 159 to terminal eight of integrated circuit A-4 and to capacitor C-1. Resistor R-13 is connected to resistor R-14 and to terminal seven of integrated circuit A-4 via wire 133. Wire 135 connects resistor R-14 to wire 125 and to terminal one of integrated circuit A-4.

Integrated circuit A-1 is connected via wire 161 to the base of switching transistor Q-1. Integrated circuit A-2 and A-4 are connected via wire 163 to the base of switching transistor Q-2. Integrated circuit A-3 is connected via wire 165 to the base of switching transistor Q-3. Wire 167 connects switching transistor Q-3 with relay K-3; wire 169 connects switching transistor Q-2 with relay K-2; and wire 171 connects switching transistor Q-1 with relay K-1.

Appropriate pullup resistors and circuit protective devices need be provided with the integrated circuits. These elements have been omitted from the drawing for clarity purposes.

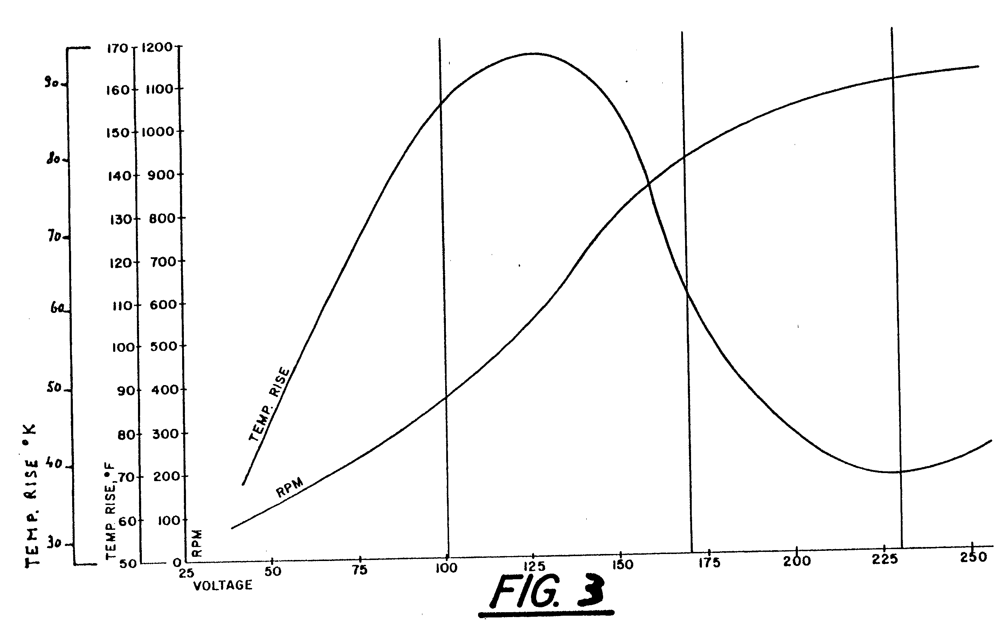

Referring now to Figure 3 there can be seen the graph of the voltage drop of the power source versus the temperature rise of a motor winding and the revolutions per minute of the motor. It can be seen at the low voltage levels there is little winding temperature rise and reduced speed. As the voltage level is increased the temperature rises dramatically until it reaches a high temperature region, somewhere in the neighborhood of 108 volts to 143 volts. Thereafter, the temperature rise decreases to the designed operating voltage of the motor of 230 volts. In the same graph, it can be seen that the speed of the motor increases in a nonlinear fashion, generally as the voltage increases. It can also be seen in the diagram that the three operating positions are indicated. The motor tested was designed to operate at 230 volts and at such voltage level has a relatively low winding temperature rise of approximately 37.5°K and an operating speed of 1080 revolutions per minute. A reduced voltage level of 170.2 volts is chosen to have a motor winding temperature rise of approximately 61.5°K and a rotational speed of approximately 920 revolutions per minute. Motors having designs voltages other than 230 volts have been found to operate in a similar manner.

At the third selected voltage of roughly 100 volts it can be seen that the temperature rise is approximately 86°K and the rotational speed roughly 375 RPM.

Hence, it can be seen that by the three speeds selected the high winding temperature region, in this case chosen to be above 89°K temperature rise, is avoided and the motor is operated only at speeds resulting in lesser motor winding temperature increases. Hence, the high temperature region is avoided and the life of the fan motor is prolonged.

Thermistor RT is mounted in heat transfer relation to a portion of the refrigeration circuit and is responsive to the temperature thereof. Based upon that temperature, a selected resistance is generated by the thermistor. Based upon the combination of this resistance and the other resistances of resistors R-2 through R-12, appropriate voltage levels are established. Resistors R-2 through R-8 and R-13 and R-14 establish reference level voltages for integrated circuits A-1 through A-4. Resistor R-9, and the resistance of the thermistor act to generate appropriate voltage drops depending upon the level of resistance generated by the thermistor. Integrated circuits A-1 through A-4 are all RCA circuits 3098 acting as programmable Schmidt triggers which have an output which goes high when the voltage level at pin 8 excess the voltage level at pin 7 and which output goes low when the voltage level at pin 8 falls below the voltage level at pin 1. Hence, if the resistance of the thermistor is such that a voltage level is detected outside the range of the voltage levels between terminals one and seven integrated circuit A-2, integrated circuit A-2 acts to sink power together with circuit components not shown through wire 163 to switching transistor Q-2 to deenergize relay K-2.

Relays K-1, K-2 and K-3 are normally open and the relay contacts as shown are those shown with the relays not energized. Upon the application of power to the circuit all the relays are initially energized switching from the positions shown.

Hence, depending upon the voltage sensed at the various terminal eights of integrated circuits A-1, A-2 and A-3, the appropriate switching transistors are de-energized. Hence, upon startup of the unit, if the voltage drop is such that, it does fall within the hysteresis range of any of the three integrated circuits all three relays are energized and are in the opposite positions than the position shown in Figure 2 such that fan motor 10 receives no power. Should the voltage change such that the voltage at terminal 8 of integrated circuit A-3 is outside the hysteresis range of that integrated circuit then wire 165 is energized and switching transistor Q-3 is de-energized thereby de-energizing relay K-3. In this condition, the K3-1 contacts are closed and K3-2 contacts are opened such that power is supplied from wire 101, through now closed relay contacts K3-1 and through wire 104 to fan motor 10. In this condition, the fan motor is operated at full speed based upon the voltage between lines L-1 and L-2.

Should the voltage level change and be detected outside the hysteresis range of integrated circuit A-2 then the Q-2 switching transistor is de-energized de-energizing relay K-2, switching the K-2 relay contacts. The K2-1 contacts are now closed and the K2-2 contacts are now open. Hence, the circuit is connected via wire 109 from transformer 50 through now closed relay contacts K2-1, through wire 107 through now closed relay contacts K3-2 through wire 104 to operate the fan motor. In this condition, the fan motor is operated with power having a voltage level of the tap of transformer 50 connected to wire 109.

Should terminal eight of integrated circuit A-1 detect a voltage outside the hysteresis range of that integrated circuit then the K-1 relay will likewise be de-energized and the K-1-1 contacts closed. Power is then supplied to the fan motor through wire 112, through the normally closed K1-1 contacts, wire 111, now closed K2-2 contacts, wire 107, now closed K3-2 contacts and wire 104 to operate the motor at a speed represented by the voltage level of the power source as connected via wire 112 to a tap of transformer 50.

In order to establish initial a minimum speed of the fan motor to establish the lubricant oil film, a startup arrangement is provided. Integrated circuit A-4 is connected such that a voltage drop outside the hysteresis range between terminals one and seven is detected upon startup. A resistance capacitance timing circuit, including resistor R-15 and capacitor C-1, acts to generate a voltage drop outside the hysteresis range of approximately three seconds upon startup. For this three second interval, switching transistor Q-2 is de-energized and the K2-1 contacts are closed thereby operating the fan motor at the middle speed since the K3-2 contacts are now closed. If the Q-3 transistor is otherwise energized the fan motor will operate at full speed.

Hence, it may be seen that a control circuit is provided for maintaining the fan motor at a selected minimum speed for a time interval to establish a lubricant film. Thereafter, the system is operated at a fan speed as determined by the conditions of the refrigeration circuit.

Referring now to Figures 2 and 3 it can be seen that fan motor 10 is operated at 100 volts, 170 volts or 230 volts. From the power side of the wiring diagram in Figure 1 it can be seen that, as shown, the fan motor will be operated at the line voltage drop 230 volts when the K3-1 relay contacts connect the fan motor directly between lines L-1 and L-2. Should a different condition be required, the appropriate relays will be energized to supply power either from the voltage tap connected to wire 112 or the voltage tap connected to wire 109. In either case, the power will be supplied to the fan motor at the appropriate voltage level.

**Claims**

1. A method of securing sleeve bearing lubrication in a machine having a plurality of operating speeds and at least one lubricated sleeve bearing securing a rotating shaft which comprises the steps of:
selecting the appropriate control signal for the rotational operating speed of the machine;
overriding this control signal by an overriding control signal to operate the machine at a rotational velocity sufficient to establish a lubricant film between the sleeve bearing and the rotating shaft; and
discontinuing the step of overriding after the elapse of a time period sufficient to establish the lubricant film.

2. The method as set forth in claim 1 wherein the step of discontinuing occurs approximately between 2 and 4 seconds after the step of overriding has energized the machine at a sufficient rotational velocity to establish the lubricant film.

3. The method as set forth in claim 1 wherein the step of overriding is bypassed if the step of selecting acts to cause the machine to be operated at a rotational velocity either sufficient to or greater than the rotational velocity necessary to establish the lubricant film.

4. A control arrangement for an electric motor having a lubricated bearing supporting the rotor shaft, said motor having a plurality of operating speeds, which comprises:
motor speed control means electrically connected to the motor;
sensor means for generating a response indicative of the motor speed desired;
circuit means connected to the sensor means and the motor speed control means for energizing the motor at the speed indicated by the sensor means; and

startup speed control means for energizing the motor at a predetermined minimum rotational speed for a time interval to establish a lubricant film within the bearing prior to operating the motor at a reduced rotational speed.

5. The control arrangement as set forth in claim 4 wherein the motor speed control means includes a tapped transformer (T) connected through relay means (K1, K2, K3) to supply power at various voltage levels to the electric motor (10) for operating the motor at selected speeds.

6. The control arrangement as set forth in claim 4 wherein the sensor means comprises a thermistor (RT) connected to vary in resistance in response to a measured temperature and wherein the circuit means comprises integrazed circuits (A1, A2, A3) connected to detect voltage drops outside a predetermined range and to appropriately de-energize relays (K1, K2, K3) in response thereto.

7. The control arrangement as set forth in claim 4 wherein the startup speed control comprises an integrated circuit (A4) connected to enable a circuit to operate the motor at a preselected minimum rotational velocity.

8. The control arrangement as set forth in claim 7 wherein the startup speed control means further comprises a resistance-capacitance timing circuit (C1, R15) for supplying a signal to the integrated circuit for a predetermined startup time interval.

9. Apparatus for regulating the volume of air circulated by a fan which comprises:

an electrical power source supplying current at a relatively constant voltage;

an electrical motor (10) mechanically coupled to rotate the fan (20), said motor including motor windings, said motor having at least one operating voltage region which results in high winding temperature and said motor operating at varying rotational velocities depending upon the voltage level of the power supplied to the motor;

a transformer (T) connected to the power source having a plurality of voltage taps, each tap being selected to provide a voltage output other than a voltage level within the region which results in high motor winding temperatures;

circuit means connecting the taps of the transformer (T) to the motor (10), said circuit means including relay means (K1, K2) for supplying power to the motor at selected voltage levels by connecting a selected transformer tap to the motor whereby variable air volumes are circulated by the fan by operating the motor at selected voltage drops to avoid voltage drops which occasion high motor winding temperatures; and

a control arrangement for securing sleeve bearing lubrication as set forth in one of the claims 4 to 8.

10. The apparatus as set forth in claim 9 wherein the transformer voltage taps are arranged such that one voltage tap is connected to deliver power at a voltage less than the voltage region wherein high winding temperatures occur and one voltage tap is connected to deliver power at a voltage higher than the voltage region where high winding temperatures occur.

11. The apparatus as set forth in claim 9 wherein the circuit means further comprises relay means (K3) for selectively supplying power at the voltage of the power source to the motor.

12. A method of regulating the volume of air circulated by a fan (20) by operating a fan motor (10) connected to power the fan at varying speeds by supplying power to the motor at selected voltage levels, while securing the sleeve bearing lubrication by a method according to claim 1, said method of regulating the volume of air comprising the steps of:

energizing the motor by supplying power to the motor at voltage levels outside a high temperature voltage region in which the motor windings may reach an overheated temperature such that the motor may be operated at varying rotational velocities without the windings overheating.

13. The method as set forth in claim 12 wherein the step of energizing includes utilizing a transformer (T) with multiple voltage taps for supplying power to the motor at varying voltage levels, said transformer having at least one voltage tap located to supply power at a voltage level below the minimum voltage level of the high temperature voltage region and at least one voltage tap located to supply power at a voltage level exceeding the maximum voltage level of the high temperature voltage region.

14. The method as set forth in claim 13 wherein the step of energizing further comprises selectively connecting the motor to a power source at the voltage level of said power source.

**Patentansprüche**

1. Verfahren zum Sicherstellen der Schmierung eines Gleitlagers in eine Maschine mit mehreren Betriebsgeschwindigkeiten und mit mindestens einem geschmierten Gleitlager, welches eine drehende Welle festhält, mit folgenden Verfahrensschritten:

Auswählen des geeigneten Steuersignals für die Betriebsdrehgeschwindigkeit der Maschine;

Übersteuern dieses Steuersignals durch ein Übersteuersignal, um die Maschine bei einer Drehgeschwindigkeit zu betreiben, welche ausreicht, um einen Schmierfilm zwischen dem Geleitlager und der drehenden Welle aufzubauen; und

Beenden des Schrittes des Übersteuernsnach dem Ablauf einer Zeitperiode, welche ausreicht, um den Schmierfilm aufzubauen.

2. Verfahren nach Anspruch 1, bei dem der Schritt des Beendens ungefähr zwischen 2 und 4 Sekunden eintritt, nachdem der Schritt des Übersteuerns die Maschine erregt hat, damit sie bei einer Drehgeschwindigkeit arbeitet, die ausreicht, um den Schmierfilm aufzubauen.

3. Verfahren nach Anspruch 1, bei dem der Schritt des Übersteuerns übergangen wird, wenn der Schritt des Auswählens dahin wirkt, dass die Maschine bei einer Drehgeschwindigkeit betrieben wird, welche entweder ausreicht oder grösser ist als die Drehgeschwindigkeit, welche notwendig ist, um den Schmierfilm aufzubauen.

4. Steuereinrichtung für einen, Elektromotor mit einem geschmierten Gleitlager, welches die Rotorwelle trägt, wobei der Motor mehrere Betriebsgeschwindigkeiten hat, mit:

einer Motorgeschwindigkeitssteuereinrichtung, welche elektrisch mit dem Motor verbunden ist;

Fühlereinrichtungen zur Erzeugung eines die gewünschte Motorgeschwindigkeit darstellenden Signals;

Stromkreise, welche mit den Fühlereinrichtungen und der Motorgeschwindigkeitssteuereinrichtung verbunden sind, um den Motor bei der durch die Fühlereinrichtung dargestellten Geschwindigkeit zu erregen, und

eine Startgeschwindigkeitssteuereinrichtung, um den Motor bei einer vorbestimmten minimalen Drehgeschwindigkeit während einem Zeitintervall zu erregen, um einen Schmierfilm in dem Gleitlager aufzubauen ehe der Motor bei einer reduzierten Drehgeschwindigkeit betrieben wird.

5. Steuereinrichtung nach Anspruch 4, bei welcher die Motorgeschwindigkeitssteuereinrichtung einen Stufentransformator (T) hat, welche über Relaiseinrichtungen (K1, K2, K3) angeschlossen ist, um die Energie bei verschiedenen Spannungsniveaus an den Elektromotor (10) zu liefern, um den Motor bei den ausgewählten Geschwindigkeiten zu treiben.

6. Steuereinrichtung nach Anspruch 4, bei welcher die Fühlereinrichtungen einen Thermistor (RT) haben, welcher geschaltet ist, um seinen Widerstand in Anhängigkeit von einer gemessenen Temperatur zu ändern, und bei dem die Stromkreise integrierte Stromkreise (A1, A2, A3) sind, welche geschaltet sind, um Spannungsabfälle ausserhalb eines bestimmten Bereiches festzustellen und die Relais (K1, K2, K3) in Abhängigkeit davon in geeigneter Weise zu entregen.

7. Steuereinrichtung nach Anspruch 4, in welcher die Startgeschwindigkeitssteuereinrichtung einen integrierten Stromkreis (A4) enthält, welcher geschaltet ist, un einen Stromkreis zu erregen, um den Motor bei einer bestimmten minimalen Drehgeschwindigkeit zu betreiben.

8. Steuereinrichtung nach Anspruch 7, in dem die Startgeschwindigkeitssteuereinrichtung desweiteren einen RC-Stromkreis (C1, R15) hat, um den integrierten Stromkreis ein Signal während einem bestimmten Startzeitintervall zuzuführen.

9. Vorrichtung zum Regeln des Luftvolumens, welches von einem Ventilator zirkuliert wird, mit einer elektrischen Spannungswelle, welche Strom bei einer relativ konstanten Spannung liefert;

einem Elektromotor (10), welcher mit dem Ventilator (20) mechanisch gekoppelt ist, zum Drehen desselben, wobei der Motor Motorwicklungen hat, sowie mindestens einen Betriebsspannungsbereich, welcher zu hohen Wicklungstemperaturen führt und der Motor bei verschiedenen Drehgeschwindigkeitten je nach Spannungsniveau der ihm zugeführten Energie arbeitet;

einem Transformator (T), welcher an die Energiequelle angeschlossen ist und mehrere Spannungs anzapfungen hat, wobei jede Abzapfung ausgewählt werden kann, um eine andere Ausgangsspannung als eine Spannungsniveau innerhalb des Bereiches zu liefern, welcher zu hohen Motorwicklungstemperaturen führt;

Stromkreise, welche die Anzapfungen des Transformators (T) mit dem Motor (10) verbinden, wobei die Stromkreise Relaiseinrichtungen (K1, K2) umfassen, um dem Motor Energie bei ausgewählten Spannungsniveaux zu liefern, indem eine ausgewählte Transformatoranzapfung mit dem Motor verbunden wird, wodurch veränderliche Luftvolumen vom Ventilator zirkuliert werden, indem der Motor bei ausgewählten Spannungsabfällen betrieben wird, um Spannungsabfälle zu vermeiden, welche hohe Motorwicklungstemperaturen bewirken; und

eine Steuereinrichtung zum Sicherstellen der Gleitlagerschmierung nach einem der Ansprüche 4 bis 8.

10. Vorrichtung nach Anspruch 9, bei welcher die Transformatorspannungsanzapfungen derart angeordnet sind, dass eine Spannungsanzapfung angeschlossen wird, um Leistung bei einer Spannung zu liefern, welche kleiner ist, als der Spannungsbereich in dem hohe Wicklungstemperaturen auftreten und eine Spannungsanzapfung angeschlossen ist, um Leistung zu liefern bei einer Spannung, welche höher als der Spannungsbereich ist, in welchem hohe Wicklungstemperaturen auftreten.

11. Vorrichtung nach Anspruch 9, bei welcher die Stromkreise desweiteren eine Relaiseinrichtung (K3) enthalten, um dem Motor selektiv Energie mit der Spannung der Energiequelle zuzuführen.

12. Verfahren zum Regeln des von einem Ventilator (20) zirkulierten Luftvolumens, in den ein Ventilatormotor, welcher zum Antrieb mit dem Ventilator verbunden ist, bei verschiedenen Geschwindigkeiten betrieben wird, indem dem Motor Leistung bei ausgewählten Spannungsniveaus zugeführt wird, während die Gleitlagerschmierung durch ein Verfahren nach Anspruch 1 sichergestellt wird, wobei das Verfahren zum Regeln des Luftvolumens folgende Verfahrensschritte umfasst;

Erregen des Motor indem dem Motor Leistung bei Spannungsniveaus ausserhalb eines hohe Temperaturen bewirkenden Spannungsbereiches zugeführt wird, in welchen die Motorwicklung eine Überhitzetemperatur erreichen kann, so dass der Motor bei verschiedenen Drehgeschwindigkeiten ohne Wicklungsüberhitzung betrieben werden kann.

13. Verfahren nach Anspruch 12, bei dem der Schritt des Erregens die Benutzung eines Transformators (T) mit mehreren Spannungsanzapfungen für die Zufuhr der Energie an den Motor bei verschiedenen Spannungsniveaux begreift, wobei der Transformator mindestens eine Spannungsanzapfung umfasst, die so angeordnet ist, dass sie Energie bei einem Spannungsniveau unterhalb des minimalen Spannungsniveaux des hohe Temperaturen bewirkenden Spannungsbereiches liefert, sowie mindestens eine Spannungsanzapfung, die so angeordnet ist, dass sie Leistung bei einem Spannungsniveau liefert, welches das maximale Spannungniveau des hohe Temperaturen bewirkenden Spannungsbereiches übersteigt.

14. Verfahren nach Anspruch 13, bei dem Schritt des Erregens desweiteren die selektive Verbindung des Motors mit einer Spannungsquelle bei dem Spannungsniveau der Spannungsquelle umfasst.

## Revendications

1. Procédé pour assurer la lubrification d'un palier à coussinet dans une machine fonctionnant à plusieurs vitesses de travail et comprenant au moins un palier à coussinet lubrifié immobilisant un arbre tournant, comprenant les étapes de:
choisir le signal de commande approprié pour la vitesse de rotation de travail de la machine;
outre-passer ce signal de commande par un signal de commande privilégié pour faire travailler la machine à une vitesse de rotation suffisante pour établir un film lubrifiant entre le palier à coussinet et l'arbre tournant; et
terminer l'étape d'outre-passer après l'écoulement d'une période de temps suffisante pour établir un film lubriant.

2. Procédé selon la revendication 1, dans lequel l'étape de terminer se déroule approximativement entre 2 et 4 secondes après que l'étape d'outre-passer a excité la machine à une vitesse de rotation suffisante pour établir le film lubrifiant.

3. Procédé selon la revendication 1, dans lequel l'étape d'outre passer est court-circuitée, si l'étape de choisir agit pour faire tourner la machine à une vitesse de rotation ou bien suffisante ou plus grande que la vitesse de rotation nécessaire pour établir le film lubrifiant.

4. Dispositif de commande pour un moteur électrique ayant un palier lubrifié supportant l'arbre du rotor, ledit moteur ayant plusieurs vitesses de travail, ledit dispositif comprenant:
un moyen de commande de la vitesse du moteur connecté de façon électrique au moteur;
un moyen détecteur pour produire une réponse indiquant la vitesse désirée du moteur;
des moyens de circuit connectés au moyen détecteur et au moyen de commande de la vitesse du moteur pour alimenter le moteur à la vitesse indiquée par le moyen détecteur, et
un moyen de commande de vitesse de démarrage pour alimenter le moteur à une vitesse de rotation minimale prédéterminée pendant un intervalle de temps pour établir un film lubrifiant dans le palier avant de faire travailler le moteur à une vitesse de rotation réduite.

5. Dispositif de commande selon la revendication 4, dans lequel le moyen de commande de vitesse du moteur comprend un transformateur à prises (T) connecté par un moyen de relais (K1, K2, K3) pour fournir de l'énergie à différents niveaux de tension au moteur électrique (10) pour faire fonctionner le moteur aux vitesses choisies.

6. Dispositif de commande selon la revendication 4, dans lequel le moyen détecteur est un thermistor (RT) connecté pour varier en résistance en réponse à la température mesurée et dans lequel le moyen de circuit comprend des circuits intégrés (A1, A2, A3) connectés pour détecter des chutes de tension à l'extérieur d'une bande prédéterminée et pour disconnecter de façon appropriée les relais (K1, K2, K3) en réponse à ces chutes de tension.

7. Dispositif de commande selon la revendication 4, dans lequel le moyen de commande de vitesse de démarrage comprend un circuit intégré (A4) connecté pour mettre en service un circuit pour faire travailler le moteur à une vitesse de rotation minimale présélectionnée.

8. Dispositif de commande selon la revendication 7, dans lequel le moyen de commande de vitesse de démarrage comprend en outre un circuit de chronométrage (C1, R15) à résistance et capacité pour fournir un signal au circuit intégré pendant un intervalle de temps de démarrage prédéterminé.

9. Appareil pour régler le volume d'air circulé par un ventilateur comprenant:
une source de puissance électrique fournissant du courant à une tension relativement constante:
un moteur électrique (10) couplé mécaniquement pour faire tourner le ventilateur (20), ledit moteur comprenant un bobinage, ledit moteur ayant au moins une plage de tensions de travail qui conduit à des températures élevées du bobinage et ledit moteur fonctionnant à des vitesses de rotation variablessuivant le niveau de tension de la puissance appliquée au moteur;
un transformateur (T) connecté à la source de puissance et ayant plusieurs prises de tension, chaque prise étant choisie pour fournir une tension de sortie autre qu'un niveau de tension dans la plage qui conduit à une température élevée du bobinage;
des moyens de circuit connectant les prises du transformateur (T) au moteur (10), lesdits moyens de circuit comprenant des moyens de relais (K1, K2) pour fournir de la puissance au moteur à des niveaux de tension choisis en connectant une prise choisie du transformateur au moteur de sorte que des volumes variables d'air sont circulés par le ventilateur en faisant travailler le moteur à des chutes de tension choisies pour éviter des chutes de tension qui conduisent à des températures élevées du bobinage; et
un dispositif de commande pour garantir la lubrification d'un palier à coussinet suivant l'une des revendications 4 à 8.

10. Appareil selon la revendication 9, dans lequel les prises de tension du transformateur sont disposées de sorte qu'une prise de tension est connectée pour fournir de la puissance à une tension inférieure que la plage de tensions dans laquelle des températures élevées du bobinage se présentent et une prise de tension est connectée pour fournir de la puissance à une tension supérieure à la plage de tensions dans laquelle des températures élevées du bobinage se présentent.

11. Appareil selon la revendication 9, dans lequel le moyen de circuit comprend en outre un moyen de relais (K3) pour fournir sélectivement de la puissance à la tension de la source d'énergie au moteur.

12. Procédé pour régler le volume d'air circulé par un ventilateur (20) en faisant fonctionner un moteur (10) de ventilateur connecté pour entraîner le ventilateur à des vitesses variables en fournissant de la puissance au moteur à des niveaux de tension choisis, tout en assurant la lubrification du palier à coussinet par une méthode selon la revendication 1, ladite méthode de régulation du volume d'air comprenant les étapes de:

alimenter le moteur en fournissant de la puissance au moteur à des niveaux de tension à l'extérieur d'une plage de tensions de température élevée dans laquelle le bobinage du moteur peut atteindre une température surélevée, de sorte que le moteur peut fonctionner à des vitesses de rotation variables sans suréchauffement du bobinage.

13. Méthode selon la revendication 12, dans laquelle l'étape d'alimenter inclue l'utilisation d'un transformateur (T) à prises de tension multiple pour fournir de la puissance au moteur à des niveaux de tension variables, ledit transformateur ayant au moins une prise de tension disposée de sorte à fournir de la puissance à un niveau de tension inférieure au niveau de tension minimum de la plage de tensions de température élevée et au moins une prise de tension disposée de sorte à fournir de la puissance à un niveau de tension dépassant le niveau de tension maximum de la plage de tension à température élevée.

14. Méthode selon la revendication 13, dans laquelle l'étape d'alimenter comprend en outre la connexion sélective du moteur à une source de puissance au niveau de tension de ladite source d'énergie.

0 097 606

## FIG. 1

1

_FIG. 2_

0 097 606

FIG. 3